# FASCICULE DE BREVET EUROPEEN

(11) **EP 1 514 147 B1**
(45) Date de publication et mention de la délivrance du brevet: **31.08.2011**
(21) Numéro de dépôt: 03760046.7
(22) Date de dépôt: 17.06.2003
(51) Int. Cl.: G02B 6/44

(54) **PROCEDE DE REALISATION D UN CABLE OPTIQUE ET MACHINE ASSOCIEE**
VERFAHREN ZUR HERSTELLUNG EINES OPTISCHEN KABELS UND DIESBEZÜGLICHE MASCHINE
METHOD FOR MAKING AN OPTICAL CABLE AND RELATED MACHINE

(30) Priorité: 17.06.2002 FR 0207425
(43) Date de publication de la demande: 16.03.2005
(73) Titulaire: AFL Telecommunications GmbH, 41238 Mönchengladbach (DE)
(72) Inventeur: BONICEL, Jean-Pierre, F-92500 Rueil Malmaison (FR); GIRARDON, Noël, F-78500 Sartrouville (FR)
(74) Mandataire: Valkonet, Rutger
(86) Numéro de dépôt international: PCT/FR2003/001823
(87) Numéro de publication internationale: WO 2003/107061

(56) Documents cités:
- US-A- 4 129 468
- US-A- 4 341 440
- US-A- 5 536 528
- US-A- 5 542 020
- US-B1- 6 205 277
- US-B1- 6 389 787

## Description

L'invention concerne le domaine des procédés de réalisation d'un câble de transmission optique ainsi que le domaine des machines permettant la mise en oeuvre desdits procédés. Les câbles de transmission optique considérés sont réalisés à partir d'une part d'un ou de plusieurs tubes comportant chacun une ou plusieurs fibres optiques disposées à l'intérieur et d'autre part à partir d'éléments de renforcements à base par exemple de fils métalliques. Le procédé selon l'invention est particulièrement intéressant pour la réalisation des câbles aériens,

Selon un premier art antérieur il est connu de réaliser des câbles dans lequel le tube à fibres optiques occupe une position périphérique. Ce type de câble, assez complexe, est réalisé à l'aide d'une machine planétaire. Un inconvénient de la machine planétaire est sa productivité relativement faible provenant d'une vitesse maximale de rotation relativement basse.

Selon un deuxième art antérieur, il est connu de réaliser des câbles dans lequel la tube à fibres optiques occupe une position centrale. Ce type de câble, plus simple, est réalisé soit à l'aide d'une machine planétaire soit à l'aide d'une machine tubulaire dont la productivité est plus élevée que celle d'une machine planétaire car sa vitesse de rotation est plus élevée. La mise en oeuvre et le fonctionnement d'une machine tubulaire est plus complexe et plus délicat que celui d'une machine planétaire, aussi est-elle reservée aux types de câble plus complexes.

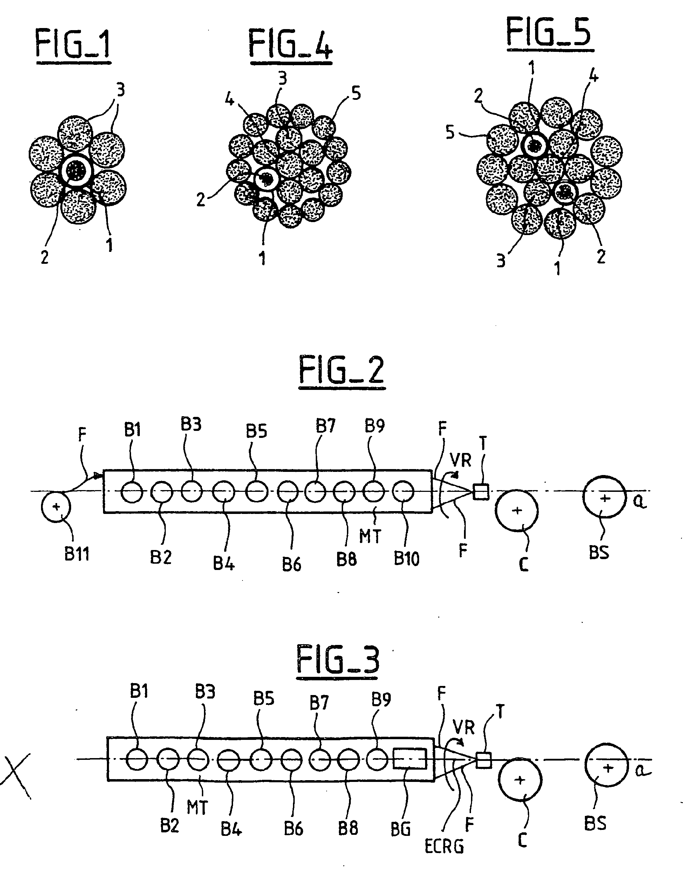

La figure 1 représente schématiquement la section d'un exemple de câble présentant une couche périphérique et dont l'élément central est un tube comportant plusieurs fibres optiques. Un tube 1 métallique comporte un ensemble de fibres optiques 2. Une couche périphérique d'éléments 3 de renforcement entoure le tube 1, les éléments 3 de renforcement étant torsadés autour du tube 1. Le cable représenté sur la figure 1 est un câble à tube central.

La figure 2 représente schématiquement la vue de profil d'une portion d'un exemple de ligne de production de câble utilisant une machine tubulaire. Une machine tubulaire MT comporte plusieurs bobines, par exemple une dizaine, numérotées de B1 à 810. Sur chacune de ces bobines B1 à B10 est enroulé un élément 3 de renforcement. Une bobine supplémentaire B11 est située en amont de la machine tubulaire MT. Le sens amont aval est le sens de progression du câble de transmission optique lors de sa réalisation. Sur la bobine supplémentaire

US 5,542,020 décrit des

Câble à fibres optiques possédant une fenêtre de contraction thermique étendue, ledit câble à fibres optiques comprenant:
un élément de support central allongé;
des moyens de définition de canal servant à définir au moins un canal s'étendant d'une manière générale dans la direction longitudinale au voisinage dudit élément de support central, ledit au moins un canal définissant un axe central et ayant une longueur mesurée le long de l'axe central; et
au moins une fibre optique disposée à l'intérieur dudit au moins un canal, ladite au moins une fibre optique possédant un coefficient de dilatation thermique inférieur au coefficient de dilatation thermique respectif d'au moins l'un desdits moyens de définition de canal et dudit support central allongé,
caractérisé en ce que chaque fibre optique possède une longueur inférieure à la longueur desdits moyens de définition de canal, mesurée le long de l'axe central, une fois que le câble à fibres optiques est assemblé de telle aorte que chaque fibre optique présente un décalage moyen de position dans la direction s'étendant d'une manière générale radialement vers l'intérieur à partir de l'axe du canal en direction de l'élément de support central lorsqu'elle est dans un état relaxé approximativement à la température ambiante de manière à étendre de ce fait la fenêtre de contraction thermique dudit câble à fibres optiques.

US 6,389,787 decrit une

Ligne de production de composant de câble, comportant:
une câbleuse destinée à recevoir sur elle des enroulements de ruban de fibre optique, la câbleuse étant agencée pour tourner par rapport à un axe (X-X) de la ligne de production;
une filière de fermeture, comportant:
   (a) un guide d'empilement, que est découplé mécaniquement de la câbleuse et qui est agencé pour tourner par rapport à un axe (X-X) de la ligne de production pour former un empilement de ruban de fibre optique torsadé,
   (b) une ouverture d'empilement formée dans le guide d'empilement et destinée à recevoir un empilement de ruban de fibre optique de la câbleuse,
la filière de fermeture étant montée de manière ajustable de sorte que l'ouverture d'empilement peut être alignée convenablement avec l'axe (X-X) de la ligne de production, et
un dispositif de commande associé de manière fanctionelle à la câbleuse et à la filière de fermeture pour commander la rotation de la câbleuse et du guide d'empilement de la filière de fermeture, le dispositif de commande fonctionnant de manière à mettre en oeuvre un rapport déterminé à l'avance de vitesses de rotation entre la câbleuse et la guide d'empilement de la filière de fermeture.

B11 est enroulé le tube 1 à l'intérieur duquel sont disposées les fibres optiques 2. Soit a l'axe de symétrie du cylindre constitué par la structure de la machine tubulaire, a est également l'axe de progression du câble lors de sa réalisation, l'axe a est représenté en traits mixtes. En aval de la machine tubulaire MT se trouvent successivement un cabestan C puis une bobine de stockage BS sur laquelle est stockée le câble de transmission optique. Le cabestan C ainsi que les bobines B11 et BS représentées sur la figure 2 tournent dans le sens des aiguilles d'une montre. L'axe des bobines B1 à B10 est perpendiculaire avec l'axe a de la machine tubulaire MT. La machine tubulaire MT tourne sur son axe a suivant la flèche VR. Entre la machine tubulaire MT et le cabestan C se trouve la tête T de préformation au niveau de laquelle se rassemblent les fils F, constitués par les éléments 3 de renforcement et par le tube 1 à fibres optiques 2. Lorsque ce type de câble est réalisé à l'aide d'une machine tubulaire MT, la bobine B11 de tube 1 à fibres optiques 2 est située en amont et à l'extérieur de la machine tubulaire MT. Le tube 1, lorsqu'il se dévide, est guidé à l'extérieur de la machine tubulaire MT le long de la machine tubulaire MT tout comme les éléments 3 de renforcement lorsqu'ils se dévident des bobines B1 à B10. Des dispositifs de guidage, connus en soi et non représentés sur la figure 2 pour des raisons de clarté, permettent ledit guidage le long de la machine tubulaire MT. Les éléments 3 de renforcement et le tube 1, symbolisés par des fils F, sont rassemblés au niveau de la tête T de préformation pour former le câble ou au moins une partie du câble lorsque celui-ci comporte plusieurs couches périphériques. A sa sortie de la tête T de préformation, le câble passe ensuite sur le cabestan C avant d'être enroulé sur la bobine de stockage BS.

Selon un troisième art antérieur, pour la réalisation d'un câble de transmission optique dont le tube central à fibres optiques présente une section nettement plus épaisse que les éléments de renforcement, il est connu d'utiliser une machine tubulaire comportant une excroissance à son extrémité avale, ladite excroissance contenant la grande bobine destinée à recevoir le tube 1 à fibres optiques 2 lequel tube 1 sera disposé au centre du câble de transmission optique ainsi réalisé.

Dans les différents arts antérieurs présentés, soit le câble à transmission optique est de type simple, c'est-à-dire présente un tube central à fibres optiques, et ledit câble peut être réalisé à l'aide d'une machine tubulaire, soit le câble à transmission optique est de type complexe, c'est-à-dire présente au moins un tube à fibres optiques qui est torsadé autour d'un élément central de renforcement, et ledit câble est réalisé à l'aide d'une machine planétaire. Or les machines planétaires ont une productivité nettement plus faible que les machines tubulaires car leur vitesse maximale de rotation est nettement inférieure à celle des machines tubulaires.

L'objet de l'invention concerne surtout les câbles de type complexe, c'est-à-dire ceux dans lesquels le tube à fibres optiques est torsadé autour d'un élément central de renforcement. Pour ce type de câble, réalisé dans l'art antérieur à l'aide d'une machine planétaire, la productivité reste relativement faible. L'invention propose de réaliser ce type de câble complexe à l'aide d'une machine tubulaire que sa relative complexité semblait réserver à la réalisation des câbles plus simples à tube central à fibres optiques.

Selon l'invention, il est prévu un procédé de réalisation d'un câble de transmission optique selon la revendication 1.

Afin de mettre en oeuvre ce procédé, il est prévu une machine tubulaire particulière spécialement adaptée à la mise en oeuvre dudit procédé de réalisation des câbles à tube à fibres optiques torsadé autour d'un élément central de renforcement. Ladite machine tubulaire particulière peut toutefois également servir à réaliser plus aisément des câbles à tube central à fibres optiques.

Selon l'invention, il est également prévu une machine tubulaire de réalisation de câble de transmission optique selon la revendication 4.

L'invention sera mieux comprise et d'autres particularités et avantages apparaîtront à l'aide de la description ci-après et des dessins joints, donnés à titre d'exemples, où :
- la figure 1 représente schématiquement la section d'un exemple de câble présentant une couche périphérique et dont l'élément central est un tube comportant plusieurs fibres optiques ;
- la figure 2 représente schématiquement la vue de profil d'une portion d'un exemple de ligne de production de câble selon l'art antérieur utilisant une machine tubulaire ;
- la figure 3 représente schématiquement la vue de profil d'une portion d'un exemple de ligne de production de câble selon l'invention utilisant une machine tubulaire selon l'invention ;
- la figure 4 représente schématiquement la section d'un exemple de câble présentant deux couches périphériques et dont l'élément central est un élément de renforcement ;
- la figure 5 représente schématiquement la section d'un autre exemple de câble présentant deux couches périphériques et dont l'élément central est un élément de renforcement ;
- la figure 6 représente un détail de la figure 3, correspondant à la partie de la machine tubulaire MT comportant la bobine B9 et le bac de graisse BG.

Pour la réalisation de câbles de transmission optique dont le ou les tubes à fibres optiques sont torsadés autour d'un élément central de renforcement qui peut lui-même être constitué de plusieurs éléments de renforcement assemblés ensemble, le procédé de réalisation selon l'invention utilise une machine tubulaire au contraire de l'art antérieur qui utilisait une machine planétaire.

Or les machines planétaires dont le diamètre va jusqu'à environ 3,5m peuvent tourner jusqu'à environ 100 tours par minute, tandis que les machines tubulaires dont le diamètre reste au voisinage de 1 m peuvent tourner jusqu'à des vitesses de l'ordre de 300 à 500 tours par minute selon les cas. Cette vitesse de rotation beaucoup plus importante permet aux machines tubulaires d'avoir une productivité nettement supérieure à celle des machines planétaires. Ce gain de productivité est particulièrement intéressant dans le cas de la réalisation de câbles aériens dont les hélices autour de l'élément central présentent un pas en moyenne nettement plus faible que celui des câbles terrestres ou sous-marins. En effet, les câbles aériens sont torsadés avec un pas relativement faible destiné à assurer aux fibres optiques qu'ils contiennent un degré de liberté leur permettant de supporter les contraintes d'étirement auxquelles lesdits câbles seront soumis une fois posés, ces contraintes étant nettement plus importantes que dans le cas de câbles terrestres ou sous-marins. Ces câbles aériens sont de préférence des câbles de phase ou bien des câbles de garde appelés OPGW (pour « fiber optic cables in overhead ground wires » en terminologie anglo-saxonne). Typiquement, pour un pas d'hélice valant par exemple 80mm, la vitesse linéaire de réalisation du câble de transmission optique vaut environ 6m par minute lorsqu'une machine planétaire est utilisée et environ 24m par minute lorsqu'une machine tubulaire est utilisée, soit un gain en productivité d'environ un facteur quatre. Le procédé selon l'invention peut toutefois également être utilisé avec certains câbles terrestres et certains câbles sous-marin à faible fond.

En reprenant la figure 2, dans le cas d'une machine tubulaire selon l'invention représentée sur la figure 3, la bobine B11 est avantageusement supprimée, tandis que le tube 1 est enroulé sur l'une des bobines B1 à B8. Le nombre de bobines choisi n'est qu'un exemple, il n'est absolument pas limitatif, il dépend en fait de l'application considérée et du type de câble à transmission optique qui est réalisé. Sur la bobine B9 est enroulé l'élément central de renforcement qui lorsqu'il se déroule passe dans le bac de graisse BG à l'aide d'un dispositif de guidage classique en soi pour ressortir par le centre de l'extrémité de la machine tubulaire MT sous la forme d'un élément central de renforcement graissé ECRG. Les autres parties de la figure 3 sont semblables à celles décrites au niveau de la figure 2. Au lieu de se dérouler de la bobine B11 qui n'a donc plus lieu d'être, d'être guidé le long de la machine tubulaire MT, pour être ramené dans une position centrale au niveau de la tête T de préformation, l'élément central de renforcement est d'abord déroulé d'une bobine située dans la machine tubulaire MT selon l'invention, par exemple B8, passe ensuite dans un bac de graisse BG également situé dans ladite machine tubulaire MT, puis sort, graissé, par l'extrémité avale de ladite machine tubulaire MT. Dans la machine tubulaire selon l'art antérieur, le guidage du tube central à fibres optiques le long de la machine tubulaire dans un dispositif de guidage, par exemple un tube plus grand, demandait des efforts importants pour vaincre les frictions de la graisse dans le dispositif de guidage. Par contre, dans la machine tubulaire selon l'invention, la disposition, au niveau de l'extrémité avale de la machine tubulaire, du bac à graisse, réduit beaucoup le trajet de l'élément de renforcement qui est graissé, ledit élément de renforcement étant de préférence l'élément central de renforcement qui se trouve ainsi bien placé à la sortie de la machine tubulaire selon l'invention car il est enroulé sur la bobine la plus proche du bac à graisse, il peut alors progresser de façon rectiligne jusqu'à la tête T de préformation. La machine tubulaire selon l'invention représentée à la figure 3 peut également être utilisée pour la réalisation de câbles de transmission optique à tube central à fibres optiques ; dans ce cas, c'est ledit tube qui se trouve enroulé sur la bobine B9 et qui va passer dans le bac de graisse BG avant de ressortir par l'extrémité de la machine tubulaire. De préférence, toutes les bobines de la machine tubulaire selon l'invention ont la même taille de manière à ce que la machine tubulaire conserve un diamètre constant le long de son axe a.

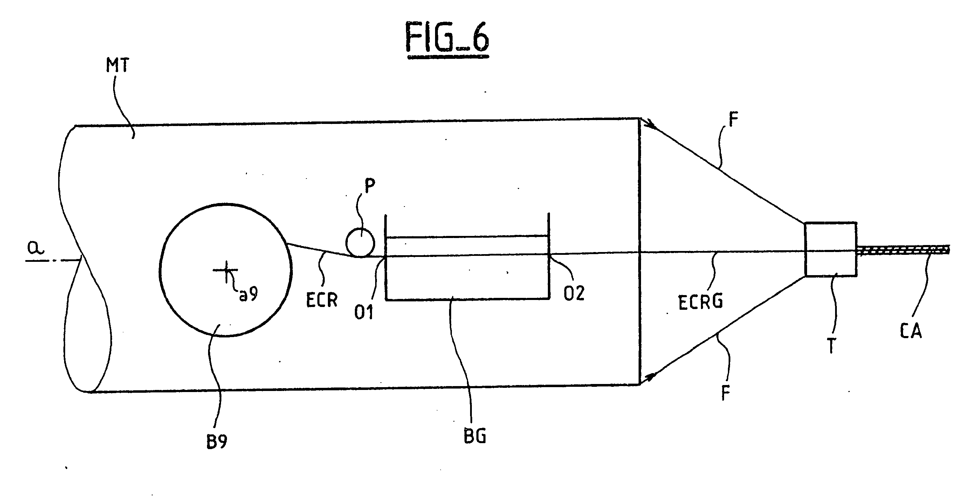

La figure 6 représente un détail de la figure 3, correspondant à la partie de la machine tubulaire MT comportant la bobine B9 et le bac de graisse BG. L'élément central de renforcement ECR quitte la bobine B9 d'axe a9, passe sur une poulie P, traverse le bac de graisse BG en entrant par une ouverture O1 et en sortant par une ouverture 02, les ouvertures O1 et O2 étant de préférence étanches pour éviter que la graisse coule hors du bac de graisse BG. Un système de poulies supplémentaires amenant l'élément central de renforcement ECR au-dessus du bac de graisse BG permet de se passer des ouvertures O1 et 02. A partir de là, l'élément central de renforcement graissé ECRG sort de la machine tubulaire MT pour passer dans la tête T de préformation par l'intermédiaire de laquelle il est associé aux fils F pour constituer le câble ou la partie de câble CA.

L'invention concerne aussi un système de réalisation d'un câble de transmission optique comportant au moins deux couches périphériques, une couche périphérique intérieure et une couche périphérique extérieure, la couche périphérique extérieure étant torsadée autour de la couche périphérique intérieure, lequel système met en oeuvre le procédé selon l'invention, de préférence en utilisant la machine tubulaire selon l'invention.

Un tel exemple de câble est notamment donné à la figure 4 qui représente schématiquement la section d'un exemple de câble présentant deux couches périphériques et dont l'élément central est un élément de renforcement. Le câble présente un élément central de renforcement 4 autour duquel sont torsadés les éléments de la couche périphérique intérieure, à savoir d'une part le tube 1 à fibres optiques 2 et d'autre part les éléments de renforcement 3. Autour de cette couche périphérique intérieure sont torsadés préférentiellement en sens inverse les éléments de la couche périphérique extérieure, à savoir les éléments de renforcement 5 qui peuvent être différents des éléments de renforcement 3.

Un autre exemple de câble est notamment donné à la figure 5 qui représente schématiquement la section d'un exemple de câble présentant deux couches périphériques et dont l'élément central est un élément de renforcement. Le câble présente un élément central de renforcement 4 autour duquel sont torsadés les éléments de la couche périphérique intérieure, à savoir d'une part deux tubes 1 à fibres optiques 2 répartis symétriquement de part et d'autre de l'élément central de renforcement 4 et d'autre part les éléments de renforcement 3. Autour de cette couche périphérique intérieure sont torsadés préférentiellement en sens inverse les éléments de la couche périphérique extérieure, à savoir les éléments de renforcement 5 qui peuvent être différents des éléments de renforcement 3.

Dans un exemple pratique correspondant au câble de la figure 5, l'élément central de renforcement 4 est, soit un fil d'acier revêtu d'aluminium (ACS pour « Aluminium Clad Steel wire » en terminologie anglo-saxonne) soit un fil d'acier galvanisé, de 3,75mm de diamètre, les tubes 1 sont des tubes métalliques dont le diamètre est compris entre 3mm et 3,4mm, et qui comprennent chacun 48 fibres optiques SMF, les éléments de renforcement 3 sont, soit des fils d'acier revêtus d'aluminium soit des fils d'acier galvanisé, de 3,5mm de diamètre, les éléments de renforcement 5 sont des fils en alliage d'aluminium (« AA wire » en terminologie anglo-saxonne) de 4mm de diamètre.

Dans cet exemple pratique de câble représenté à la figure 5, la couche périphérique intérieure a été réalisée à l'aide d'une machine tubulaire selon l'invention tournant environ à 300 tours par minute et la couche périphérique extérieure a été réalisée à l'aide d'une machine planétaire, la machine tubulaire et la machine planétaire étant disposées l'une à la suite de l'autre. Les deux couches périphériques peuvent également être réalisées à l'aide de deux machines tubulaires disposées l'une à la suite de l'autre. Ledit câble peut également être réalisé en deux étapes distinctes, lorsque les machines utilisées, soit deux tubulaires soit une tubulaire puis une planétaire, ne sont pas disposées l'une à la suite de l'autre dans l'usine de fabrication de câble. Dans tous les cas, de préférence, les deux machines tournent en sens inverse l'une de l'autre. Dans l'art antérieur, le type de câble représenté à la figure 5 était réalisée avec une machine planétaire à double cage, la productivité étant alors limitée par la vitesse de rotation de la cage qui tourne la moins vite ainsi que par le pas de câblage.

## Revendications

1. Procédé de réalisation d'un câble de transmission optiques à partir d'une part d'au moins un tube (1) à l'intérieur duquel sont disposées plusieurs fibres optiques (2) et d'autre part d'élements de renforcement. (3,4,5), l'un des éléments de renforcement, appelé élément central de renforcement (4), étant disposé au centre du cable, certains éléments de renforcement, appelés éléments de renforcement périphériques (3), et le tube (1) étant torsadés autour de l'élément central de renforcement (4) à l'aide d'une machine tubulaire de manière à former une couche périphérique autour de cet élément central de renforcement (4), les éléments de renforcement périphériques (3) et le tube (1) ayant des diamétres suffisamment proches pour que la couche périphérique soit homogène, et l'élément central de renforcement (4), d'au moins un tube (1) et les éléments de renforcement périphériques (3) sont déroulés des plusieurs bobines (B1 à B9) situées à l'intérieur de la machine tubulaire, **caractérisé en ce que** l'élément central de renforcement (4) dans un bac de graisse (BG) également situé dans la machine tubulaire, puis sort par une extrémité de la machine tubulaire.

2. Procédé de réalisation d'un câble de transmission optique selon la revendication 1, **caractérisé en ce que** la cable de trasmission optique est un câble aérien.

3. Procédé de réalisation d'un câble de transmission optique selon la revendication 2 **caractérisé en ce que** le câble de transmission optique est un câble de garde ou un câble de phase.

4. Machine tubulaire de réalisation de câble de transmission optique, où le câble comporte un élément central de renforcement (4), d'au moins un tube (1) à l'intérieur duquel sont disposées plusieurs fibres optiques (2) et les éléments de renforcement periphériques (3), la machine tubulaire comportant plusieurs bobines (B1 à B9) situées à l'intérieur de celle-ci **caracterisée en ce que**, entre l'ensemble des bobines (B1 à B9) d'une part et une extrémité de la machine tubulaire d'autre part, sont situés un bac à graisse (8G) et un dispositif de guidage disposés de maniére à ce que l'élément central de renforcement (4) se dévidant de la bobine la plus proche (B9) du bac à graisse (BG) passe dans le bac à graisse (80) avant de sortir par l'extrémité de la machine tubulaire.

5. Machine tubulaire selon la revendication 4, **caractérisée en ce que** la bobine la plus proche (89) du bac à graisse (BG) est destinée à recevoir l'élément central de renforcement (4).

6. Machine tubulaire selon les revendication 4 à 5, **caractérisés en ce que** toutes les bobines (B1 à B9) ont la même taille de manière à ce que la machine tubulaire conserve un diamètre, constant.

7. Système de réalisation d'un câble de transmission optique comportant au moins deux couches périphériques, une couche périphérique intérieure et une couche périphérique extérieure, la couche périphérique extérieure étant torsadée autour de la couche périphérique intérieure, mettant en oeuvre le procédé selon l'une quelconque du revendications 1 à 3, en utilisant la machine tublulaire selon l'une quelconque des revendication 4 à 6.

8. Système selon la revendication 7, caractère en ce que les deux couches périphériques sont réalisées à l'aide de deux machines tubulaires disposées l'une à la suite de l'autre.

9. Système selon la revendication 7, **caractérisé en ce que** les deux couches périphériques sont réalisées en deux étapes distinctes à l'aide de deux machines tubulaires.

10. Système selon la revendication 7, **caractérisé en ce que** la couche périphérique inférieure est réalisée à l'aide d'une machine tubulaire et **en ce que** la couche périphérique extérieure est réalisée à l'aide d'une machine planétaire la machine tubulaire et la machine planétaire étant disposées l'une à la suite de l'autre.

11. système selon la revendication 7, **caractérisé en ce que** la couche périphérique intérieure est réalisée au cours d'une première étape à l'aide d'une machine tubulaire et **en ce que** la couche périphérique extérieure est réalisée au cours d'une deuxième étapes distincte de la première étape à l'aide d'une machine planétaire.

12. Système selon l'une quelconque des revendications 8 à 11, **caractérisé en ce que** les deux machines tournent en sens inverse l'une de l'autre.

## Claims

1. Method for production of an optical transmission cable from on the one hand at least one tube (1) inside which are disposed a plurality of optical fibres (2) and on the other hand reinforcing members (3, 4, 5), one of the reinforcing members, called the central reinforcing member (4), being disposed at the centre of the cable, some reinforcing members, called peripheral reinforcing members (3), and the tube (1) being twisted around the central reinforcing member (4) by means of a tubular machine in such manner as to form a peripheral layer around that central reinforcing member (4), the peripheral reinforcing members (3) and the tube (1) having sufficiently similar diameters for the peripheral layer to be homogeneous, and the central reinforcing member (4), at least one tube (1) and the peripheral reinforcing members (3) are paid out from a plurality of spools (B1 to B9) situated inside the tubular machine, **characterised in that** the central reinforcing member (4) enters a grease tank (BG) also situated in the tubular machine, and then exits via one end of the tubular machine.

2. Method according to claim 1 of producing an optical transmission cable, **characterised in that** the optical transmission cable is an overhead cable.

3. Method according to claim 2 of producing an optical transmission cable, **characterised in that** the optical transmission cable is a ground wire or a phase wire.

4. Tubular machine for producing optical transmission cable that includes a central reinforcing member (4), at least one tube (1) inside which are disposed a plurality of optical fibres (2), and peripheral reinforcing members (3), the tubular machine including a plurality of spools (B1 to B9) situated inside the latter, **characterised in that**, between on the one hand the set of spools (B1 to B9) and on the other hand one end of the tubular machine are situated a grease tank (BG) and a guide device disposed in such manner that the central reinforcing member (4) being paid out from the spool (B9) nearest the grease tank (BG) enters the grease tank (BG) before leaving via the end of the tubular machine.

5. Tubular machine according to claim 4, **characterised in that** the spool (B9) nearest the grease tank (BG) is intended to receive the central reinforcing member (4).

6. Tubular machine according to claims 4 to 5, **characterised in** all the spools (B1 to B9) are the same size so that the tubular machine retains a constant diameter.

7. System for producing, using the method according to any of claims 1 to 3 and the tubular machine according to any of claims 4 to 6, an optical transmission cable including at least two peripheral layers, i.e. an interior peripheral layer and an exterior peripheral layer, the exterior peripheral layer being twisted around the interior peripheral layer.

8. System according to claim 7, **characterised in that** the two peripheral layers are produced by means of two tubular machines disposed one after the other.

9. System according to claim 7, **characterised in that** the two peripheral layers are produced in two separate steps by means of two tubular machines.

10. System according to claim 7, **characterised in that** the interior peripheral layer is produced by means of a tubular machine and **in that** the exterior peripheral layer is produced by means of a planetary machine, the tubular machine and the planetary machine being disposed one after the other.

11. System according to claim 7, **characterised in that** the interior peripheral layer is produced by means of a tubular machine during a first step and the exterior peripheral layer is produced by means of a planetary machine during a second step separate from the first step.

12. System according to any of claims 8 to 11, **characterised in that** the two machines turn in opposite directions.

## Patentansprüche

1. Verfahren zur Herstellung eines optischen Übertragungskabels ausgehend einerseits von mindestens einem Rohr (1), innerhalb dessen mehrere optische Fasern (2) angeordnet sind, und andererseits von Verstärkungselementen (3, 4, 5), wobei eines der Verstärkungselemente, als zentrales Verstärkungselement (4) bezeichnet, in der Mitte des Kabels angeordnet ist, wobei bestimmte, als Umfangsverstärkungselemente (3) bezeichnete Verstärkungselemente (3), und das Rohr (1) um das zentrale Verstärkungselement (4) mit Hilfe einer rohrförmigen Maschine verdrillt sind, so dass eine Umfangsschicht um dieses zentrale Verstärkungselement (4) gebildet wird, wobei die Umfangsverstärkungselemente (3) und das Rohr (1) Durchmesser aufweisen, die einander nahe genug sind, damit die Umfangsschicht homogen ist, wobei das zentrale Verstärkungselement (4), das mindestens eine Rohr (1) und die Umfangsverstärkungselemente (3) von mehreren Spulen (B1 bis B9) abgewickelt werden, die sich im Inneren der rohrförmigen Maschine befinden, **dadurch gekennzeichnet, dass** das zentrale Verstärkungselement (4) durch eine Fettwanne (BG) läuft, die auch in der rohrförmigen Maschine angeordnet ist, und anschließend aus einem Ende der rohrförmigen Maschine heraustritt.

2. Verfahren zur Herstellung eines optischen Übertragungskabels nach Anspruch 1, **dadurch gekennzeichnet, dass** das optische Übertragungskabel ein Luftkabel ist.

3. Verfahren zur Herstellung eines optischen Übertragungskabels nach Anspruch 2, **dadurch gekennzeichnet, dass** das optische Übertragungskabel ein Erdungskabel oder ein Phasenkabel ist.

4. Rohrförmige Maschine zur Herstellung eines optischen Übertragungskabels, in welcher das Kabel ein zentrales Verstärkungselement (4), mindestens ein Rohr (1), innerhalb dessen mehrere optische Fasern (2) angeordnet sind, und die Umfangsverstärkungselemente (3) aufweist, wobei die rohrförmige Maschine mehrere Spulen (B1 bis B9) aufweist, die sich in ihrem Inneren befinden, **dadurch gekennzeichnet, dass** zwischen der Baugruppe der Spulen (B1 bis B9) einerseits und einem Ende der rohrförmigen Maschine andererseits eine Fettwanne (BG) und eine Führungsvorrichtung so angeordnet sind, dass das zentrale Verstärkungselement (4), das sich von der der Fettwanne (BG) am nächsten liegenden Spule (B9) abwickelt, durch die Fettwanne (BG) läuft, bevor es aus dem Ende der rohrförmigen Maschine austritt.

5. Rohrförmige Maschine nach Anspruch 4, **dadurch gekennzeichnet, dass** die der Fettwanne (BG) am nächsten liegenden Spule (B9) dazu dient, das zentrale Verstärkungselement (4) aufzunehmen.

6. Rohrförmige Maschine nach den Ansprüchen 4 bis 5, **dadurch gekennzeichnet, dass** alle Spulen (B1 bis B9) die gleiche Größe aufweisen, so dass die rohrförmige Maschine einen gleichbleibenden Durchmesser beibehält.

7. System zur Herstellung eines optischen Übertragungskabels mit mindestens zwei Umfangsschichten, nämlich einer inneren und einer äußeren Umfangsschicht, wobei die äußere Umfangsschicht um die innere Umfangsschicht verdrillt ist, welches das Verfahren nach einem der Ansprüche 1 bis 3 unter Verwendung der rohrförmigen Maschine nach einem der Ansprüche 4 bis 6 durchführt.

8. System nach Anspruch 7, **dadurch gekennzeichnet, dass** die beiden Umfangsschichten mit Hilfe von zwei hintereinander angeordneten rohrförmigen Maschinen hergestellt werden.

9. System nach Anspruch 7, **dadurch gekennzeichnet, dass** die beiden Umfangsschichten in zwei einzelnen Schritten mit Hilfe der beiden rohrförmigen Maschinen hergestellt werden.

10. System nach Anspruch 7, **dadurch gekennzeichnet, dass** die innere Umfangsschicht mit Hilfe einer rohrförmigen Maschine und die äußere Umfangsschicht mit Hilfe einer Planetenmaschine hergestellt sind, wobei die rohrförmige Maschine und die Planetenmaschine hintereinander angeordnet sind.

11. System nach Anspruch 7, **dadurch gekennzeichnet, dass** die innere Umfangsschicht während eines ersten Schritts mit Hilfe einer rohrförmigen Maschine und die äußere Umfangsschicht während eines zweiten Schritts, der sich vom ersten Schritt unterscheidet, mit Hilfe einer Planetenmaschine hergestellt werden.

12. System nach einem der Ansprüche 8 bis 11, **dadurch gekennzeichnet, dass** die beiden Maschinen in entgegengesetzter Richtung zueinander laufen.
